# EUROPEAN PATENT APPLICATION

(11) **EP 4 270 559 A1**
(43) Date of publication of application: **01.11.2023**
(21) Application number: 22767394.4
(22) Date of filing: 03.03.2022
(51) Int. Cl.: H01M 8/04119

(54) **MEMBRANE HUMIDIFIER FOR FUEL CELL**

(30) Priority: 12.03.2021 KR 20210032468
(71) Applicant: Kolon Industries, Inc., Seoul 07793 (KR)
(72) Inventor: HER, Jung Kun, Seoul 07793 (KR); KIM, Do Woo, Seoul 07793 (KR); AN, Woong Jeon, Seoul 07793 (KR); KIM, Kyoung Ju, Seoul 07793 (KR)
(74) Representative: Ter Meer Steinmeister & Partner
(86) International application number: PCT/KR2022/002975
(87) International publication number: WO 2022/191498

(57) **Abstract**

The present invention relates to a membrane humidifier for a fuel cell which can improve humidification efficiency by selectively supplying exhaust gas discharged from a fuel cell stack to each part of a hollow fiber membrane module. A membrane humidifier for a fuel cell according to an embodiment of the present invention comprises: a hollow fiber membrane module, a humidification module, and an active flow control unit formed between a fuel cell stack and the humidification module and automatically controlling the exhaust gas discharged from the fuel cell stack so as to be supplied to at least one selected from among a first and an exhaust gas inlets.

## Description

The present invention relates to a fuel cell membrane humidifier, and more particularly, to a fuel cell membrane humidifier capable of improving humidification efficiency by allowing an off-gas discharged from a fuel cell stack to be selectively supplied to each portion of a hollow fiber membrane module.

### [Background Art]

Fuel cells are power generation cells that produce electricity through coupling between hydrogen and oxygen. The fuel cells have an advantage of being able to continuously produce electricity as long as the hydrogen and the oxygen are supplied, and having an efficiency that is about twice higher than an internal combustion engine because of no heat loss, unlike general chemical cells such as dry batteries or storage batteries.

Further, since chemical energy generated through coupling between the hydrogen and the oxygen is directly converted into electrical energy, emission of pollutants is reduced. Therefore, the fuel cells have an advantage of being environmentally friendly and being able to reduce concerns about resource depletion due to increased energy consumption.

These fuel cells are roughly classified into, for example, a polymer electrolyte membrane fuel cell (PEMFC), a phosphoric acid fuel cell (PAFC), a molten carbonate fuel cell (MCFC), a solid oxide fuel cell (SOFC), and an alkaline fuel cell (AFC) depending on a type of electrolyte used.

These fuel cells fundamentally operate according to the same principle, but have a difference in a type of fuel used, an operating temperature, a catalyst, an electrolyte, or the like. Among the cells, the polymer electrolyte membrane fuel cell (PEMFC) is known to be the most promising not only for small-scale stationary power generation equipment but also for transportation systems because the polymer electrolyte membrane fuel cell operates at a lower temperature than other fuel cells and can be miniaturized due to a high output density.

One of the most important factors in improving the performance of the polymer electrolyte membrane fuel cell (PEMFC) is to maintain moisture content by supplying a certain amount or more of moisture to a polymer electrolyte membrane (or proton exchange membrane: PEM) of a membrane electrode assembly (MEA). This is because the efficiency of power generation is rapidly degraded when the polymer electrolyte membrane is dried.

Examples of a method for humidifying the polymer electrolyte membrane include 1) a bubbler humidification scheme for filling a pressure-resistant container with water and then passing a target gas through a diffuser to supply moisture, 2) a direct injection scheme for calculating a moisture supply amount required for a fuel cell reaction and directly supplying moisture to a gas flow pipe through a solenoid valve, and 3) a humidification membrane scheme for supplying moisture to a fluidized gas layer using a polymer separation membrane.

Among these, the membrane humidification scheme for humidifying a polymer electrolyte membrane by providing water vapor to air supplied to the polymer electrolyte membrane using a membrane that selectively permeates only water vapor contained in an off-gas is advantageous in that a weight and size of a humidifier can be reduced.

A selective permeable membrane used in the membrane humidification scheme is preferably a hollow fiber membrane having a large permeable area per unit volume when a module is formed. That is, when a humidifier is manufactured using hollow fiber membranes, there are advantages that high integration of the hollow fiber membranes with a large contact surface area is possible so that a fuel cell can be sufficiently humidified even with a small capacity, low-cost materials can be used, and moisture and heat contained in an off-gas discharged with a high temperature from the fuel cell can be recovered and can be reused through the humidifier.

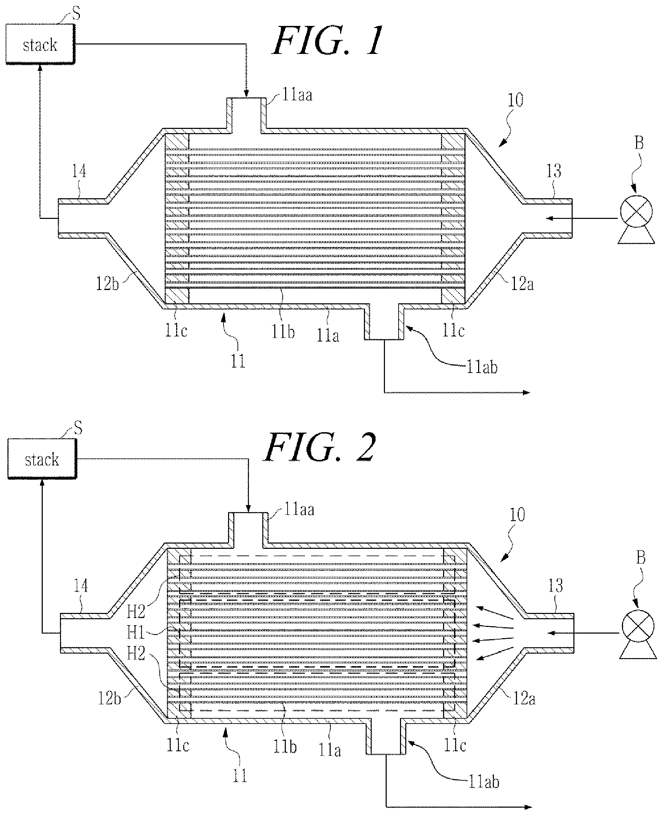

FIG. 1 is a view illustrating a fuel cell membrane humidifier according to the related art.

As illustrated in FIG. 1, the fuel cell membrane humidifier 10 of the related art includes a humidification module 11 in which moisture exchange occurs between a dry gas supplied from a blower (B) and wet air (an off-gas) discharged from a fuel cell stack S, and caps 12 (12a and 12b) coupled to both ends of the humidification module 11.

A dry gas inlet 13 is formed in one cap 12a between the caps 12 to supply a dry gas supplied from the blower B to the humidification module 11, and a dry gas outlet 14 is formed in the other cap 12b to supply the air humidified by the humidification module 11 to the fuel cell stack S.

The humidification module 11 includes a mid-case 11a having an off-gas inlet 11aa and an off-gas outlet 11ab, and a plurality of hollow fiber membranes 11b in the mid-case 11a. Both ends of a bundle of hollow fiber membranes 11b are fixed to potting portions 11c. The potting portions 11c are generally formed by curing a liquid polymer such as a liquid polyurethane resin through a casting scheme.

The dry gas supplied from the blower B flows along hollows of the hollow fiber membranes 11b. The off-gas flowing into the mid-case 11a through the off-gas inlet 11aa comes into contact with outer surfaces of the hollow fiber membranes 11b, and then, is discharged from the mid-case 11a through the off-gas outlet 11ab. When the off-gas comes into contact with the outer surfaces of the hollow fiber membranes 11b, moisture contained in the off-gas permeates the hollow fiber membranes 11b to humidify the dry gas flowing along the hollows of the hollow fiber membranes 11b.

Meanwhile, referring to FIG. 2, according to the related art of FIG. 1, since the dry gas flowing into the humidification module 11 from the blower B flows mainly along the inside of the hollow fiber membranes disposed in a central portion (see H1 in FIG. 2) among the hollow fiber membranes 11b, and the off-gas flowing into the mid-case 11a from the fuel cell stack S through the off-gas inlet 11aa mainly flows along the outside of the hollow fiber membranes disposed in a peripheral portion (see H2 in FIG. 2) among the hollow fiber membranes 11b, there is a problem in that contact between the dry gas and the off-gas is reduced and humidification efficiency is lowered.

### [Disclosure]

### [Technical Problem]

An object of the present invention is to provide a fuel cell membrane humidifier capable of improving humidification efficiency by allowing an off-gas discharged from a fuel cell stack to be selectively supplied to each portion of a hollow fiber membrane module.

### [Technical Solution]

A fuel cell membrane humidifier according to the embodiment of the present invention includes
a hollow fiber membrane module configured to accommodate a plurality of hollow fiber membranes therein, the hollow fiber membranes humidifying a dry gas supplied from a blower through moisture exchange between the dry gas and an off-gas flowing into the inside from a fuel cell stack; a humidification module including a first off-gas inlet through which the off-gas flows into the inside from the fuel cell stack and a first off-gas outlet through which the off-gas subjected to the moisture exchange is discharged, the humidification module accommodating the hollow fiber membrane module therein; a sub-module configured to partition the hollow fiber membrane module into a central portion and a peripheral portion, the sub-module including a second off-gas inlet through which the off-gas discharged from the fuel cell stack flows into the inside and a second off-gas outlet through which the off-gas subjected to the moisture exchange is discharged; and an active flow control unit formed between the fuel cell stack and the humidification module to perform automatic control so that the off-gas discharged from the fuel cell stack is able to be supplied to at least one selected from the first and second off-gas inlets.

In the fuel cell membrane humidifier according to the embodiment of the present invention, the active flow control unit may be formed of a bimetal made in one rod shape by piling two or more metal plates having different coefficients of thermal expansion.

In the fuel cell membrane humidifier according to the embodiment of the present invention, the active flow control unit may perform automatic control so that the off-gas is able to be supplied to the at least one selected from the first and second off-gas inlets, depending on a temperature of the off-gas discharged from the fuel cell stack.

In the fuel cell membrane humidifier according to the embodiment of the present invention, the active flow control unit may perform automatic control so that the off-gas is able to be supplied to the at least one selected from the first and second off-gas inlets, depending on an output situation of the fuel cell stack.

The fuel cell membrane humidifier according to the embodiment of the present invention may further include a turbulence generation portion configured to change a flow direction of the dry gas flowing into the inside from the blower so that the dry gas is evenly distributed to the hollow fiber membranes.

The fuel cell membrane humidifier according to the embodiment of the present invention may include caps fastened to both ends of the humidification module, wherein the turbulence generation portion may be formed on an inner wall of the dry gas inlet formed in the cap.

In the fuel cell membrane humidifier according to the embodiment of the present invention, the turbulence generation portion may include a plurality of protrusions formed to protrude from the inner wall of the dry gas inlet, and the plurality of protrusions are disposed to be spaced apart from each other in a zigzag shape.

In the fuel cell membrane humidifier according to the embodiment of the present invention, the turbulence generation portion may further include
a through hole formed to penetrate the turbulence generation portion in a direction parallel to a dry gas flow direction inside the dry gas inlet.

Other specific matters of implementation examples according to various aspects of the present invention are included in the detailed description below.

### [Advantageous Effects]

According to an embodiment of the present invention, it is possible to improve humidification efficiency by allowing the off-gas discharged from the fuel cell stack to be selectively supplied to each portion of the hollow fiber membrane module.

### [Description of Drawings]

FIG. 1 is a cross-sectional view illustrating a fuel cell membrane humidifier according to the related art.
FIG. 2 is a cross-sectional view illustrating problems of the fuel cell membrane humidifier according to the related art.
FIG. 3 is a perspective view illustrating a fuel cell membrane humidifier according to the embodiment of the present invention.
FIG. 4 is a diagram illustrating an active flow control unit of the fuel cell membrane humidifier according to the embodiment of the present invention.
FIGS. 5 and 6 are diagrams illustrating an operating state of the active flow control unit of FIG. 4.
FIGS. 7 to 9 are cross-sectional views illustrating operating states of the fuel cell membrane humidifier according to the embodiment of the present invention.
FIG. 10 is an enlarged view of a turbulence generation portion that is a component of the fuel cell membrane humidifier according to the embodiment of the present invention.
FIG. 11 is a view illustrating an operating state of the turbulence generation portion in FIG. 10.
FIG. 12 is an enlarged view of an application example of the turbulence generation portion.

### [Mode for Disclosure]

Since various changes may be made to the present invention, which may have several embodiments, specific embodiments will be illustrated and described in detail herein. However, it will be understood that this is not intended to limit the present invention to the specific embodiments, and all changes, equivalents, or substitutions included in the spirit and scope of the present invention are included.

The terms used herein are for the purpose of describing specific embodiments only and are not intended to limit the present invention. The singular expressions "a," "an" and "the" include the plural expressions, unless the context clearly indicates otherwise. It will be understood that the terms "include" or "have" herein specify the presence of features, numbers, steps, operations, components, parts or combinations thereof described herein, but do not preclude the presence or addition of one or more other features, numbers, steps, operations, components, parts or combinations thereof. Hereinafter, a fuel cell membrane humidifier according to embodiments of the present invention will be described with reference to the drawings.

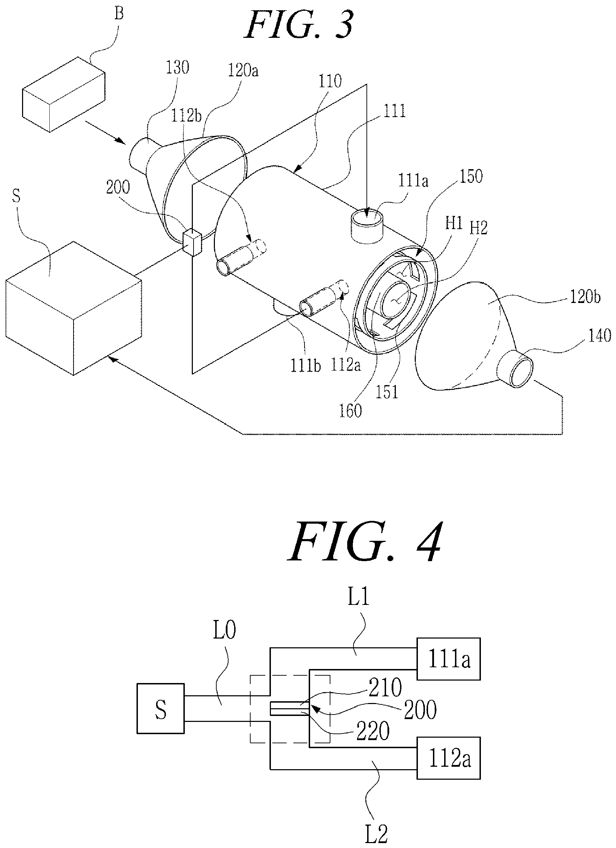

FIG. 3 is a perspective view illustrating the fuel cell membrane humidifier according to the embodiment of the present invention. As illustrated in FIG. 3, the fuel cell membrane humidifier according to the embodiment of the present invention includes a humidification module 110 that humidifies a dry gas supplied from the blower B with moisture in an off-gas discharged from the fuel cell stack S. Both ends of the humidification module 110 are coupled to caps 120 (120a and 120b). The humidification module 110 and the cap 120 may be separately formed or may be integrally formed.

A dry gas inlet 130 is formed in one cap 120a between the caps 120 to supply the dry gas supplied from the blower B to the humidification module 110, and a dry gas outlet 140 is formed in the other one cap 120b to supply air humidified by the humidification module 110 to the fuel cell stack S.

The humidification module 110 is an apparatus in which moisture exchange occurs between the dry gas supplied from the blower B and the off-gas, and includes a mid-case 111 having a first off-gas inlet 111a and a second off-gas outlet 111b, and a hollow fiber membrane module 150 installed inside the mid-case 111 and accommodating a plurality of hollow fiber membranes F. Both ends of the hollow fiber membranes F are fixed to a potting part (not illustrated).

A plurality of off-gas inlet holes 151 are formed as through holes in the hollow fiber membrane module 150, and the plurality of hollow fiber membranes F included in the hollow fiber membrane module 150 are divided and partitioned into a central portion H1 and a peripheral portion H2 by the sub-module 160. The off-gas inlet holes 151 guide the off-gas, which is supplied into the humidification module 110, into the hollow fiber membrane module 150 so that the off-gas flows into the hollow fiber membrane module 150.

The hollow fiber membrane module 150 may be partitioned into the central portion H1 and the peripheral portion H2 by the sub-module 160. The sub-module 160 may be formed in a hollow pipe shape. The sub-module 160 may be formed in a coaxial structure inside the hollow fiber membrane module 150. A second off-gas inlet 112a through which the off-gas discharged from the fuel cell stack S flows into the inside is formed on one side of the sub-module 160, and a second off-gas outlet 112b through which the off-gas supplying moisture to the inside of the hollow fiber membranes F is discharged is formed to penetrate on the other side. The second off-gas inlet 112a and the second off-gas outlet 112b are formed to penetrate the mid-case 111 and the hollow fiber membrane module 150.

The off-gas supplied to the first off-gas inlet 111a of the humidification module 110 flows into the hollow fiber membrane module 150 through the off-gas inlet holes 151, and is supplied only to the hollow fiber membranes disposed in the peripheral portion H2 of the hollow fiber membrane module 150.

The second off-gas inlet 112a supplies the off-gas discharged from the fuel cell stack S into the sub-module 160, that is, to the central portion H1 of the hollow fiber membrane module 150, and the second off-gas outlet 112b discharges the off-gas that has performed moisture exchange with the dry gas in the hollow fiber membrane in the central portion H1 of the hollow fiber membrane module 150 to the outside. The off-gas supplied to the second off-gas inlet 112a is supplied only to the hollow fiber membranes disposed in the central portion H1 of the hollow fiber membrane module 150.

The mid-case 111 and the cap 120 (120a and 120b) may be independently formed of hard plastic or metal, and may have a circular or polygonal cross section in a width direction. The "circular" include oval, and "polygonal" includes polygonal with rounded corners. Examples of the hard plastic may include polycarbonate, polyamide (PA), polyphthalamide (PPA), and polypropylene (PP).

The hollow fiber membranes F may include a polymer membrane formed of a polysulfone resin, a polyethersulfone resin, a sulfonated polysulfone resin, a polyvinylidene fluoride (PVDF) resin, a polyacrylonitrile (PAN) resin, a polyimide resin, a polyamideimide resin, a polyesterimide resin, or a mixture of two or more of these, and the potting portions may be formed by curing a liquid resin such as a liquid polyurethane resin through a casting scheme such as deep potting or centrifugal potting.

The dry gas supplied from the blower B flows along hollows of the hollow fiber membranes F. The off-gas flowing into the hollow fiber membrane module 150 through the first and second off-gas inlets 111a and 112a comes into contact with outer surfaces of the hollow fiber membranes F and then is discharged to the outside through the first and second off-gas outlets 111b and 112b. When the off-gas contacts the outer surfaces of the hollow fiber membranes F, moisture contained in the off-gas permeates the hollow fiber membranes F to humidify the dry air flowing along the hollows of the hollow fiber membranes F.

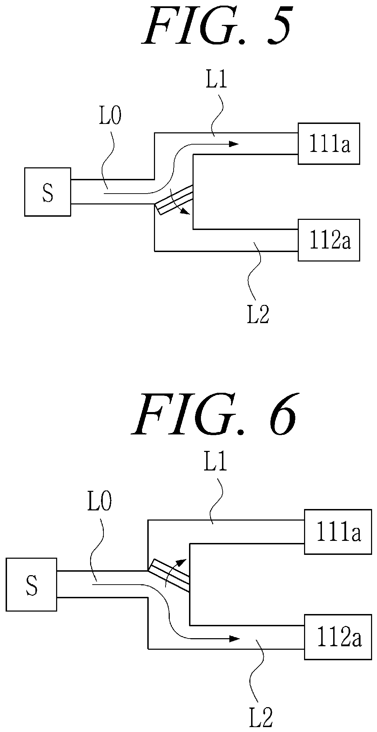

An active flow control unit 200 is formed between the fuel cell stack S and the humidification module 110. The active flow control unit 200 allows an off-gas to be supplied to at least one selected from the first and second off-gas inlets 111a and 112a depending on a temperature of the off-gas discharged from the fuel cell stack S. The active flow control unit 200 controls a flow direction of the off-gas discharged from the fuel cell stack S and flowing into the humidification module 110 so that a utilization region of the hollow fiber membrane module 150 can be increased and an amount of humidification can be actively adjusted depending on an output situation of the fuel cell stack S. This will be described with reference to FIGS. 4 and 5.

FIG. 4 is a diagram illustrating the active flow control unit of the fuel cell membrane humidifier according to the embodiment of the present invention, and FIGS. 5 and 6 are diagrams illustrating operating states of the active flow control unit of FIG. 4.

As illustrated in FIG. 4, the active flow control unit 200 is formed between the fuel cell stack S and the first and second off-gas inlets 111a and 112a. The fuel cell stack S and the active flow control unit 200 are connected to each other by a discharge flow path L0, the active flow control unit 200 and the first off-gas inlet 111a are connected to each other by a first flow path L1, and the active flow control unit 200 and the second off-gas inlet 112a are connected to each other by a second flow path L2.

A flow direction of the off-gas flowing through the discharge flow path L0 from the fuel cell stack S is controlled by the active flow control unit 200 formed at an end of the discharge flow path L0, so that the off-gas flows to the first and second off-gas inlets 111a and 112a through at least a portion of the first flow path L1 and the second flow path L2.

The active flow control unit 200 adjusts the flow direction of the off-gas flowing into the first off-gas inlet 111a and the second off-gas inlet 112a depending on an output state of the fuel cell stack. The active flow control unit 200 actively adjusts the flow direction of the off-gas depending on change in temperature of the off-gas according to a high or low output of the fuel cell stack.

To this end, the active flow control unit 200 may be formed of a bimetal made in one rod shape by piling two or more metal plates having different coefficients of thermal expansion.

When an output of the fuel cell stack S is low, the amount of humidification in the humidification module 110 is relatively small, and when the output of the fuel cell stack S is high, the amount of humidification in the humidification module 110 is relatively large.

Further, when the output of the fuel cell stack S is low, the off-gas supplied from the fuel cell stack S to the humidification module 110 is at a relatively low temperature, and when the output of the fuel cell stack S is high, the off-gas supplied from the fuel cell stack S to the humidification module 110 is at a relatively high temperature. Typically, a difference between the temperature of the flue gas at the time of a low output and the temperature of the flue gas at the time of a high output is about 30°C. Thus, the temperature of the off-gas is made different depending on the output of the fuel cell stack S, and the active flow control unit 200 including the bimetal is bent in one direction depending on the temperature of the off-gas so that an opening of the flow path can be adjusted.

The active flow control unit 200 automatically adjusts openings of the first flow path L1 and the second flow path L2 using the bimetal so that the amount of humidification in the humidification module 110 is made small when the output is low and the amount of humidification in the humidification module 110 is made large when the output is high.

Meanwhile, the amount of humidification may be determined by the number N1 of hollow fiber membranes F accommodated in the central portion H1 and the number N2 of hollow fiber membranes F accommodated in the peripheral portion H2. For example, when N1 is greater than N2, the bimetal of the active flow control unit 200 may be deformed so that the off-gas is supplied to the central portion H1 at the time of a high output and may be deformed so that the off-gas is supplied to the peripheral portion H2 at the time of a low output. That is, the bimetal in the active flow control unit 200 may be deformed so that the off-gas is supplied to the second off-gas inlet 112a as illustrated in FIG. 6 at the time of a high output, and may be deformed so that the flue gas is supplied to the first off-gas inlet 111a as illustrated in FIG. 5 at the time of a low output. In this case, in the active flow control unit 200, a metal plate 210 (a first flow path side metal plate) on the first off-gas inlet 111a side may be a metal having a small coefficient of thermal expansion, and a metal plate 220 (a second flow path side metal plate) on the second off-gas inlet 112a side may be a metal having a large coefficient of thermal expansion.

Such an active flow control unit 200 can cause the off-gas to flow evenly to the first off-gas inlet 111a and the second off-gas inlet 112a, a larger amount of off-gas to flow to any one of the first off-gas inlet 111a and the second off-gas inlet 112a, or the off-gas not to flow to any one of the first off-gas inlet 111a and the second off-gas inlet 112a, actively depending on the output state of the fuel cell stack to adjust the flow rate without a valve for off-gas flow direction control, a sensor for sensing a flow rate of the off-gas, and a control unit for controlling an operation of the valve.

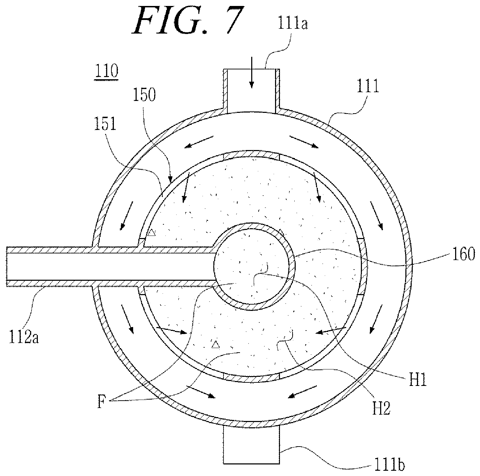

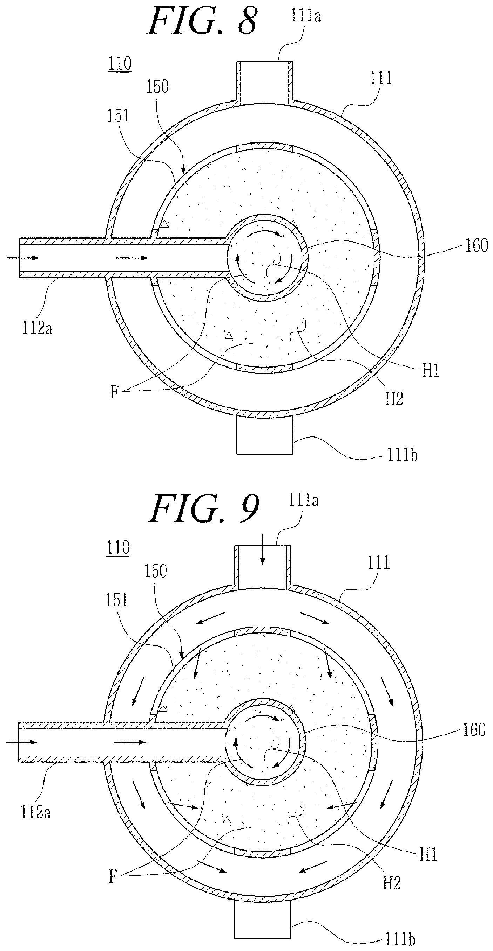

The off-gas discharged from the fuel cell stack S is supplied only to the peripheral portion H2 of the hollow fiber membrane module 150 and flows as illustrated in FIG. 7, is supplied and flowed only to the central portion H1 of the hollow fiber membrane module 150 and flows illustrated in FIG. 8, or is simultaneously supplied to the central portion H1 and the peripheral portion H2 of the hollow fiber membrane module 150 and flows as illustrated in FIG. 9, under the flow control of the active flow control unit 200, and the utilization region of the hollow fiber membrane module 150 can be changed and adjusted according to such an operation of the active flow control unit 200, so that the humidification efficiency of the membrane humidifier can be improved.

Further, the change and adjustment of the utilization region of the hollow fiber membrane module 150 according to the operation of the active flow control unit 200 makes it possible to change and adjust the amount of humidification depending on a state of the fuel cell stack S.

According to the embodiment of the present invention, it becomes possible to adjust a degree of humidification of the dry gas supplied to the stack, depending on the state of the fuel cell stack, thereby enabling appropriate air humidification depending on operation conditions of the stack.

Meanwhile, in the fuel cell membrane humidifier of the related art as illustrated in FIGS. 1 and 2, the dry gas flowing into the humidification module 11 from the blower B mainly flows along the inside of the hollow fiber membranes disposed in a central portion (see H1 in FIG. 2) of the hollow fiber membranes 11b. Therefore, even when the active flow control unit 200 adjusts the flow direction of the off-gas flowing into the first off-gas inlet 111a and the second off-gas inlet 112a depending on the output state of the fuel cell stack S, uneven distribution of the dry gas results in ineffective adjustment of the degree of humidification of the dry gas.

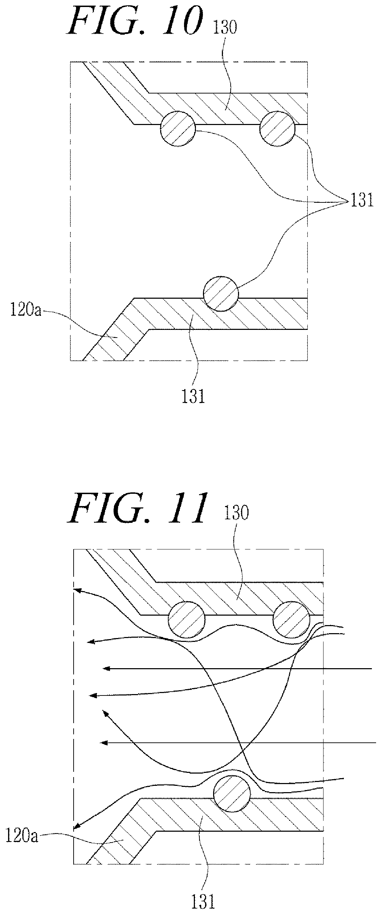

Accordingly, in the present invention, a turbulence generation portion 131 that causes the dry gas to be evenly distributed to the hollow fiber membranes F may be further included on the dry gas inlet 130 side, as illustrated in FIG. 10.

The turbulence generation portion 131 is formed on an inner wall of the dry gas inlet 130 to change a flow direction of the dry gas so that the dry gas is evenly distributed to the hollow fiber membranes F. The dry gas inlet 130 may be a portion of the cap 120a formed to be connected to the blower B or a separate pipe connecting the blower B to the cap 120a.

The turbulence generation portion 131 may be formed on the inner wall of the dry gas inlet 130. The turbulence generation portion 131 may be formed of a plurality of protrusions formed to protrude from the inner wall of the dry gas inlet 130. The plurality of protrusions may be spaced apart from each other in a zigzag shape. In the drawing, a shape of the protrusion is illustrated as a spherical shape, but is not particularly limited. Alternatively, a fixing groove (not illustrated) may be formed on the inner wall of the dry gas inlet 130, and the turbulence generation portion 131 may be formed in a sphere or protrusion shape and inserted into and fixed to the fixing groove (not illustrated).

FIG. 11 is a view illustrating a dry gas flow state due to the turbulence generation portion 131 of FIG. 10.

A part of the dry gas flowing into the dry gas inlet 130 from the blower B collides with the turbulence generation portion 131 in the sphere or protrusion shape formed on the inner wall of the dry gas inlet 130 so that the flow direction of the dry gas is changed, a flow direction of a nearby dry gas is influenced, and turbulence is formed as a whole. The dry gas converted into turbulence by the turbulence generation portion 131 diffuses from an end of the dry gas inlet 130 and flows into not only the hollow fiber membranes disposed near the dry gas inlet 130, but also the hollow fiber membranes disposed far from the dry gas inlet 130. As a result, most of the dry gas flowing into the dry gas inlet 130 can be evenly distributed to the hollow fiber membranes F in the humidification module 110.

Meanwhile, the turbulence generation portion 131 can cause the dry gas to be evenly distributed to the hollow fiber membranes F, but also causes a loss of pressure of the dry gas due to collision of the dry gas with the turbulence generation portion 131. This may reduce a flow rate of the dry gas and degrade the humidification efficiency.

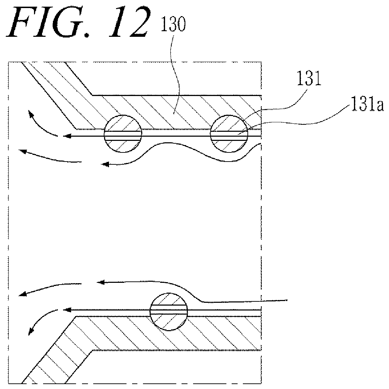

In order to reduce deterioration in humidification efficiency due to such a pressure loss, a through hole 131a may be additionally formed in the turbulence generation portion 131, as illustrated in FIG. 12. The through hole 131a is formed to penetrate at least a portion of the turbulence generation portion 131. The through hole 131a may be formed in a direction parallel to a dry gas flow direction inside the dry gas inlet 130.

Accordingly, a part of the dry gas flowing into the dry gas inlet 130 collides with the turbulence generation portion 131 and a flow direction thereof changes, but the remaining part flows straight through the through hole 131a. The dry gas whose flow direction is changed contributes to formation of turbulence, and a part of the dry gas flowing straight through the through hole 131a flows as it is without a pressure loss.

Thus, as a whole, the dry gas is mixed with turbulence (a dry gas flow that has lost straightness) and a direct flow (a dry gas flow that maintains the straightness) and is relatively evenly distributed to the hollow fiber membranes F, so that a pressure loss of the dry gas can be reduced.

Although the embodiment of the present invention has been described above, those skilled in the art can variously modify or change the present invention through affixation, change, deletion, addition, or the like of components without departing from the spirit of the present invention described in the claims, and this will be said to be also included within the scope of the present invention.

### [Detailed Description of Main Elements]

110: humidification module 120a, 120b: cap
111a: first off-gas inlet 111b: first off-gas outlet
112a: second off-gas inlet 112b: second off-gas outlet
130: dry gas inlet 131: turbulence generation portion
140: dry gas outlet 150: hollow fiber membrane module
160: sub-module 200: active flow control unit
H1: central portion H2: peripheral portion
F: hollow fiber membrane B: blower
S: fuel cell stack

## Claims

1. A fuel cell membrane humidifier comprising:
a hollow fiber membrane module configured to accommodate a plurality of hollow fiber membranes therein, the hollow fiber membranes humidifying a dry gas supplied from a blower through moisture exchange between the dry gas and an off-gas flowing into the inside from a fuel cell stack;
a humidification module including a first off-gas inlet through which the off-gas flows into the inside from the fuel cell stack and a first off-gas outlet through which the off-gas subjected to the moisture exchange is discharged, the humidification module accommodating the hollow fiber membrane module therein;
a sub-module configured to partition the hollow fiber membrane module into a central portion and a peripheral portion, the sub-module including a second off-gas inlet through which the off-gas discharged from the fuel cell stack flows into the inside and a second off-gas outlet through which the off-gas subjected to the moisture exchange is discharged; and
an active flow control unit formed between the fuel cell stack and the humidification module to perform automatic control so that the off-gas discharged from the fuel cell stack is able to be supplied to at least one selected from the first and second off-gas inlets.

2. The fuel cell membrane humidifier of claim 1, wherein the active flow control unit is formed of a bimetal made in one rod shape by piling two or more metal plates having different coefficients of thermal expansion.

3. The fuel cell membrane humidifier of claim 1, wherein the active flow control unit performs automatic control so that the off-gas is able to be supplied to the at least one selected from the first and second off-gas inlets, depending on a temperature of the off-gas discharged from the fuel cell stack.

4. The fuel cell membrane humidifier of claim 1, wherein the active flow control unit performs automatic control so that the off-gas is able to be supplied to the at least one selected from the first and second off-gas inlets, depending on an output situation of the fuel cell stack.

5. The fuel cell membrane humidifier of claim 1, further comprising:
a turbulence generation portion configured to change a flow direction of the dry gas flowing into the inside from the blower so that the dry gas is evenly distributed to the hollow fiber membranes.

6. The fuel cell membrane humidifier of claim 5, comprising:
caps fastened to both ends of the humidification module,
wherein the turbulence generation portion is formed on an inner wall of the dry gas inlet formed in the cap.

7. The fuel cell membrane humidifier of claim 6,
wherein the turbulence generation portion includes a plurality of protrusions formed to protrude from the inner wall of the dry gas inlet, and
the plurality of protrusions are disposed to be spaced apart from each other in a zigzag shape.

8. The fuel cell membrane humidifier of claim 6, wherein the turbulence generation portion further includes a through hole formed to penetrate the turbulence generation portion in a direction parallel to a dry gas flow direction inside the dry gas inlet.
